# EUROPÄISCHE PATENTANMELDUNG

(11) **EP 4 733 637 A1**
(43) Veröffentlichungstag der Anmeldung: **29.04.2026**
(21) Anmeldenummer: 25209109.5
(22) Anmeldetag: 16.10.2025
(51) Int. Cl.: F16J 15/06, F16J 15/10, F16J 15/12

(54) **DICHTUNG UND VERFAHREN ZUM ABDICHTEN EINES KONTAKTBEREICHS**

(30) Priorität: 23.10.2024 DE 102024210217
(71) Anmelder: Volkswagen Aktiengesellschaft, 38440 Wolfsburg (DE)
(72) Erfinder: Rang, Oliver, 38440 Wolfsburg (DE); Schochow, Eckhard, 38440 Wolfsburg (DE); Schmäling, Jan, 38440 Wolfsburg (DE); Steinmetz, Felix Manuel, 38440 Wolfsburg (DE)

(57) **Zusammenfassung**

Es wird vorgeschlagen, vor der Montage einer Dichtung ein feuchtigkeitsverdrängendes Material beziehungsweise ein hydrophobes Material auf eine Kontaktfläche der Dichtung aufzutragen. Es kann so eine verbesserte Korrosionsfestigkeit erzielt werden. In einer Weiterbildung kann das feuchtigkeitsverdrängende Material in einer mikroverkapselten Form aufgetragen und erst unmittelbar vor oder nach der Montage der Dichtung aktiviert werden.

## Beschreibung

Die Erfindung betrifft eine Dichtung zum Abdichten eines Kontaktbereichs zwischen einem ersten Bauteil und einem zweiten Bauteil, ein Verfahren zum Abdichten eines Kontaktbereichs zwischen einem ersten Bauteil und einem zweiten Bauteil, ein System aus einem Gehäuse und einer Dichtung sowie ein Kraftfahrzeug.

Es sind, beispielsweise für Anwendungen im Fahrzeugbau, eine Vielzahl von unterschiedlich ausgestalteten Dichtungen bekannt, die verwendet werden können, um zwei miteinander verbundene Bauteile gegeneinander abzudichten. Im Regelfall werden solche Dichtungen zwischen den beiden miteinander zu verbindenden Bauteile angeordnet, woraufhin dann die beiden Bauteile gegeneinander gepresst werden, beispielsweise durch eine Verschraubung, wobei die Dichtung zwischen den beiden Bauteilen eingeklemmt wird.

Bekannte Dichtungen können beispielsweise als Halbsickendichtung oder als Vollsickendichtung, als Gummi-Metall-Dichtung, als kumulierte Dichtung oder als Dichtung mit einer Dichtlippe ausgestaltet sein. Eine solche Dichtung kann, beispielsweise wenn die Dichtung Teil eines Kraftfahrzeugs ist, korrosiven Angriffen ausgesetzt sein. Dies kann insbesondere der Fall sein, wenn die Dichtung aus einem relativ harten Material, beispielsweise aus einem Metall oder auch aus einem festen Kunststoff, besteht, da die Oberfläche solcher Materialien Mikrorauigkeiten aufweisen kann, welche dann wiederum zum Eindringen von Flüssigkeiten wie Wasser in den Dichtbereich führen können. Dieses Wasser kann dann das erste und/oder das zweite Bauteil oder aber die Dichtung selbst korrosiv angreifen. Im Falle eines Kraftfahrzeugs kann das von außen eindringende Wasser oftmals einen Salzgehalt aufweisen, der zu einer beschleunigten Korrosion führen kann.

Es ist weiterhin bekannt, eine Dichtung mit einem adhäsiven Material zu beschichten. Die Dichtung wird dann also mit dem ersten Bauteil und/oder mit dem zweiten Bauteil verklebt. Nachteilig an einer solchen Ausgestaltung ist, dass sich die beiden Bauteile, beispielsweise im Wartungsfall, nur mit großem Aufwand wieder voneinander trennen lassen. Wenn eines der Bauteile beispielsweise ein Deckel für ein Gehäuse ist, und wenn Zugriff auf den Innenraum des Gehäuses notwendig ist, so lässt sich eine verklebte Dichtung nur aufwendig von dem Gehäuse trennen, und zum Wiederverschließen des Gehäuses muss dieses vorab aufwendig aufbereitet werden, da zunächst die Rückstände des adhäsiven Materials entfernt werden müssen.

Ebenfalls ist es bekannt, beispielsweise eine Metalldichtung nach dem Einbau mit Fett oder Öl zu behandeln, um einen Korrosionsschutz zu erzielen. Das Applizieren des Schutzstoffes ist aber aufwendig und je nach geometrischer Einbaulage teilweise unmöglich. Weiterhin ist eine solche Beschichtung oft von relativ kurzer Lebensdauer, da äußere Einflüsse direkt den aufgebrachten Schutzstoff angreifen können.

Aus der DE 10 2004 009 209 A1 ist eine Zylinderkopfdichtung mit einer Funktionslage bekannt, die zur Vermeidung von Spaltkorrosion und Kontaktkorrosion gegenüber anderen Bauteilen elektrisch isoliert ist. Die Zylinderkopfdichtung umfasst eine metallische Funktionslage mit mindestens einer einen Brennraum umgebenden Öffnung und einer von der Öffnung abgewandten, nach außen weisenden Randkante, sowie eine elektrisch isolierende und fluiddichte Elastomerschicht. Dabei umschliesst die Elastomerschicht die Randkante der Funktionslage.

Aus der US 2006/0131818 A1 ist eine Dichtung bekannt, die geeignet ist, zwischen zwei abzudichtenden Bauteilen angeordnet zu werden, von denen mindestens eines einen ersten metallischen Werkstoff enthält, der unedler als Aluminium ist. Die Dichtung weist mindestens eine Dichtungslage mit einer Platte aus einem zweiten metallischen Werkstoff auf, der edler als der erste metallische Werkstoff ist, so dass die Kontaktkorrosion an den abzudichtenden Bauteilen vermindert oder ganz verhindert wird. Dabei ist vorgesehen, dass die Dichtungslage ein an einem äußeren Randbereich der Platte angeordnetes Dichtelement umfasst, das aus einem elastomeren Werkstoff besteht und im eingebauten Zustand der Dichtung den Spalt zwischen der Dichtungslage und dem den ersten metallischen Werkstoff enthaltenden Bauteil im Wesentlichen flüssigkeitsdicht abdichtet.

In der DE 10 2004 058 234 A1 wird eine Zylinderkopfdichtung zur Abdichtung von Bauteilen einer Verbrennungskraftmaschine beschrieben, die eine Funktionslage mit einem umlaufenden Randbereich umfasst, und eine Schutzlage mit einem über den Randbereich der Funktionslage vorspringenden Dichtbereich, wobei die Schutzlage im vorspringendem Dichtbereich mindestens eine umlaufende Beschichtung aufweist.

Die aus dem Stand der Technik bekannten Dichtungen zielen dabei hauptsächlich auf die Vermeidung einer Kontaktkorrosion durch unterschiedliche elektrochemische Potenziale der beteiligten Materialien ab. Die aus dem Stand der Technik bekannten Dichtungen sind aber überwiegend aufwendig in der Herstellung und teilweise trotzdem anfällig gegenüber durch Spritzwasser oder sonstige Wassereinträge verursachte Korrosion.

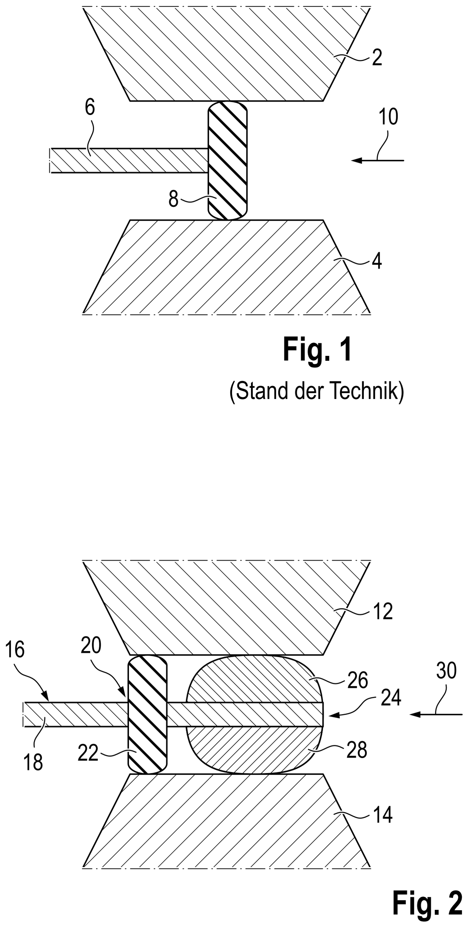

Figur 1 zeigt eine schematische Schnittdarstellung einer aus dem Stand der Technik bekannten Dichtung 6. Die Dichtung 6 ist als Gummi-Metall-Dichtung ausgeführt und weist einen Elastomeranteil 8 auf, der die Dichtwirkung der Dichtung 6 bewirkt. Die Dichtung 6 ist zwischen dem ersten Bauteil 2 und dem zweiten Bauteil 4 eingespannt. Von außen ist schematisch der Korrosionsangriff 10 dargestellt, der in Form von eindringender Feuchtigkeit die Dichtung 6 und/oder die Bauteile 2 und 4 angreifen kann. Es ist wie bereits weiter oben ausgeführt bekannt, von außen Korrosionsschutzmittel auf die Dichtung aufzutragen. Dies ist aber oftmals umständlich oder in der Praxis unmöglich.

Es ist daher die Aufgabe der vorliegenden Erfindung, eine Dichtung der eingangs genannten Art anzugeben, die einfach herzustellen ist und zuverlässig vor durch Feuchtigkeit verursachter Korrosion geschützt.

Die Aufgabe wird erfindungsgemäß gelöst durch eine Dichtung zum Abdichten eines Kontaktbereichs zwischen einem ersten Bauteil und einem zweiten Bauteil, mit einem Grundkörper aus Metall oder Kunststoff, und mit einer Hauptdichtzone zum Erzielen einer primären Dichtwirkung, wobei die Hauptdichtzone ausgestaltet ist, um auf einer ersten Seite mit dem ersten Bauteil in Kontakt zu stehen und um auf einer zweiten Seite mit dem zweiten Bauteil in Kontakt zu stehen, und mit einer Nebendichtzone, wobei auf eine erste Oberfläche der Nebendichtzone und/oder auf eine zweite Oberfläche der Nebendichtzone ein dauerplastisches hydrophobes Material oder ein mikroverkapseltes hydrophobes Material aufgetragen ist. Die Aufgabe wird ebenfalls gelöst durch ein System aus einem Gehäuse und einer solchen Dichtung, und durch ein Kraftfahrzeug mit einer solchen Dichtung oder einem solchen System.

Die Aufgabe wird weiterhin gelöst durch ein Verfahren zum Abdichten eines Kontaktbereichs zwischen einem ersten Bauteil und einem zweiten Bauteil, mit den Schritten
a. Vorlegen eines ersten Bauteils, eines zweiten Bauteils und einer Dichtung mit einem Grundkörper aus Metall oder Kunststoff,
b. Applizieren eines dauerplastischen hydrophoben Materials oder eines mikroverkapselten hydrophoben Materials auf einen Bereich zumindest einer Seite der Dichtung,
c. darauffolgendes Anordnen der Dichtung zwischen dem ersten Bauteil und dem zweiten Bauteil, und
d. Verbinden des ersten Bauteils und des zweiten Bauteils miteinander.

Unter einem Grundkörper wird im Rahmen der vorliegenden Beschreibung insbesondere ein flächig ausgestalteter, Struktur gebender Anteil der Dichtung bezeichnet, welcher die Grundform der Dichtung bestimmt. Die Grundform des Grundkörpers ist dabei im Regelfall an den Umriss der Grenzfläche der beiden zu verbindenden Bauteile angepasst. Die beiden Bauteile können dabei beispielsweise zwei Gehäusebauteile, beispielsweise ein Gehäuse und ein Deckel, sein.

Unter einer Hauptdichtzone zur Erzielung einer primären Dichtwirkung wird im Rahmen der vorliegenden Beschreibung insbesondere ein Bereich der Dichtung verstanden, in dem das erste Bauteil und das zweite Bauteil unter Vermittlung der Dichtung aneinandergrenzen. Üblicherweise wird in diesem Bereich durch eine Verbindung der beiden Bauteile miteinander Druck auf die Dichtung ausgeübt. Die Dichtung wird mit der Hauptdichtzone also zwischen den beiden Bauteilen eingeklemmt. Hieraus ergibt sich dann die primäre Dichtwirkung, beispielsweise gegenüber Flüssigkeiten wie Ölen. Die primäre Dichtwirkung ist dabei die Hauptaufgabe der Dichtung.

Unter einer Nebendichtzone wird im Rahmen der vorliegenden Beschreibung insbesondere ein Bereich der Dichtung verstanden, der von der Hauptdichtzone verschieden ist und entlang der Kontaktfläche zwischen dem ersten Bauteil und dem zweiten Bauteil in einem anderen Bereich als die Hauptdichtzone angeordnet ist. Es ist möglich, dass von dem ersten Bauteil und dem zweiten Bauteil auf die Nebendichtzone ein geringerer Druck als auf die Hauptdichtzone oder kein Druck ausgeübt wird.

Unter einem mikroverkapselten hydrophoben Material kann dabei ein feuchtigkeitsverdrängendes beziehungsweise ein wasserverdrängendes Material verstanden werden, welches eine feste Außenhülle aufweist, wobei die Außenhülle drucksensitiv aufplatzen kann und das feuchtigkeitsverdrängende Material dann freigibt, so dass dieses seine Wirkung entfalten kann.

Erfindungsgemäß ist erkannt worden, dass es auf einfache Weise möglich ist, eine verbesserte Korrosionsbeständigkeit des Dichtverbunds zu erzielen, in dem neben der Hauptdichtzone eine Nebendichtzone vorgesehen wird, welche die Hauptdichtzone vor angreifendem Spritzwasser und ähnlichen Umwelteinflüssen schützt. In der Nebendichtzone wird hierzu ein feuchtigkeitsverdrängendes Material, mit anderen Worten also ein hydrophobes Material, eingesetzt. Das feuchtigkeitsverdrängende Material wird auf einen Anteil zumindest einer Kontaktfläche der Dichtung, vorzugsweise auf Anteile beider Kontaktflächen der Dichtung, aufgetragen. Dieses verhindert zuverlässig, dass Feuchtigkeit bis zur Hauptdichtzone gelangt und dort zu korrosiver Zerstörung führen könnte.

Die Nebendichtzone lässt sich auf einfache Weise herstellen, in dem vor dem Einbau der Dichtung das feuchtigkeitsverdrängende Material auf die Dichtung aufgetragen wird. Es ist dabei möglich, entweder auf eine Seite, beispielsweise auf die zu dem ersten Bauteil weisende Seite der Dichtung, das feuchtigkeitsverdrängende Material aufzutragen, oder es kann auf beide Seiten der Dichtung, beispielsweise auf die zum ersten Bauteil weisende Seite der Dichtung und auf die zum zweiten Bauteil weisende Seite der Dichtung, feuchtigkeitsverdrängendes Material aufgetragen werden. Im eingebauten Zustand der Dichtung befindet sich das feuchtigkeitsverdrängende Material dann auf einer oder auf beiden Seiten der Dichtung jeweils zwischen der Dichtung und dem angrenzenden Bauteil. Es können dabei von dem feuchtigkeitsverdrängenden Material kleinste Hohlräume ausgefüllt werden, sodass in diese keine Feuchtigkeit eindringen kann.

Vorzugsweise ist das hydrophobe Material spaltfüllend ausgestaltet. Mit anderen Worten kann das hydrophobe Material dann in einer Form und in einer Menge vorhanden sein, dass sichergestellt ist, dass kein Luft- oder Feuchtigkeitsaustausch zwischen dem Raum auf der Innenseite des hydrophoben Materials und dem Raum auf der Außenseite des hydrophoben Materials besteht. Ebenfalls vorzugsweise kann das hydrophobe Material säurebeständige und/oder laugenbeständige Eigenschaften aufweisen. Mit anderen Worten kann das hydrophobe Material eine hohe chemische Beständigkeit aufweisen. Es kann dann neben dem Eindringen von Feuchtigkeit auch das Eindringen weiterer korrosionsfördernder Stoffe, beispielsweise das Eindringen von Säuren oder Laugen, verhindert werden.

Gemäß einer bevorzugten Ausgestaltung ist die Nebendichtzone näher als die Hauptdichtzone an einem äußeren Umfang der Dichtung angeordnet. Beispielsweise kann die Nebendichtzone radial weiter außen angeordnet sein als die Hauptdichtzone. In den meisten Anwendungsfällen soll die Verbindung gegen eine beispielsweise innerhalb eines Gehäuses angeordnete Flüssigkeit abgedichtet werden, was dann der primären Dichtwirkung entspricht. Die primäre Dichtwirkung zielt in diesem Fall also darauf ab, ein Austreten der Flüssigkeit aus dem Inneren des abgedichteten Bereichs, beispielsweise eines Gehäuses oder Behälters, zu verhindern. Die von der Nebendichtzone ausgeübte sekundäre Dichtwirkung hingegen zielt darauf ab, ein Eindringen von Flüssigkeiten, beispielsweise von Feuchtigkeit, von außen in den primären Dichtungsbereich und schlussendlich auch in das Innere des Behälters oder des Gehäuses, zu verhindern.

Gemäß einer vorteilhaften Ausgestaltung kann das feuchtigkeitsverdrängende Material ein Wachs, ein Fett oder ein hochviskoses Kriechöl sein.

Es ist wie bereits angesprochen möglich, dass das auf die erste Oberfläche der Nebendichtzone und/oder auf die zweite Oberfläche der Nebendichtzone aufgetragene hydrophobe Material ein mikroverkapseltes hydrophobes Material ist. Die Mikroverkapselung ist dabei ein Verfahren, bei dem winzige Partikel oder Tröpfchen eines Wirkstoffs, beispielsweise in einer Größe von Nanometern bis Mikrometern, einer Substanz oder eines Materials in eine Hülle oder Schicht eingeschlossen werden, um sie zu schützen, zu stabilisieren oder kontrolliert freizusetzen. Diese Hülle, oft aus einem Polymer oder anderen geeigneten Materialien, bildet eine mikroskopisch kleine Kapsel, die den Wirkstoff umschließt.

Die beschriebene Ausgestaltung hat den Vorteil, dass sich das oftmals hoch viskose und klebrige hydrophobe Material auf diese Weise einfacher verarbeiten lässt. Nach dem Auftragen befindet sich das hydrophobe Material dann in einer passivierten Form, in der es nicht an anderen Gegenständen haftet. Die Dichtung kann dann einfach transportiert und zum Einsatzort gebracht werden. Nach dem Montieren der Dichtung kann das hydrophobe Material dann auf verschiedene Weisen aktiviert bzw. freigesetzt werden. Dabei wird die Mikroverkapselung deaktiviert bzw. zerstört, sodass das enthaltene hydrophobe Material freigesetzt wird und seine Wirkung entfalten kann.

Beispielsweise kann das auf die erste Oberfläche der Nebendichtzone und/oder auf die zweite Oberfläche der Nebendichtzone aufgetragene aktivierbare mikroverkapselte hydrophobe Material durch Druck aktivierbar sein. Auf diese Weise lässt sich die Aktivierung oftmals direkt beim Einbau der Dichtung ohne weiteren Arbeitsschritt vornehmen, da solche Dichtungen regelmäßig zwischen zwei Bauteilen eingespannt werden, wodurch ein Druck auf die Dichtung ausgeübt wird. Beispielsweise können zwei Bauteile, beispielsweise zwei Gehäuseteile oder ein Gehäuse und ein Deckel, miteinander verschraubt werden. Die beiden Bauteile werden dann aneinander gezogen, wodurch ein auf die zwischen den beiden Bauteilen angeordnete Dichtung ein Druck ausgeübt wird, welcher dann zum Freisetzen des hydrophobe Materials aus der Mikroverkapselung führen kann.

Alternativ ist es möglich, dass das auf die erste Oberfläche der Nebendichtzone und/oder auf die zweite Oberfläche der Nebendichtzone aufgetragene aktivierbare mikroverkapselte hydrophobe Material durch Wärmezufuhr oder durch elektromagnetische Strahlung aktivierbar ist. Es lässt sich so noch genauer einstellen, wann das hydrophobe Material aktiviert bzw. freigesetzt werden soll. Weiterhin sind solche Mikroverkapselungen leicht erhältlich und mit relativ geringen Kosten einsetzbar.

Die Dichtung kann auf unterschiedliche Arten ausgestaltet sein. Beispielsweise kann die Dichtung aus unterschiedlichen Materialien, beispielsweise aus einem Kunststoff oder einem Metall, bestehen. Grundsätzlich ist die erfindungsgemäße Nebendichtzone mit einer Vielzahl von unterschiedlichen Dichtungen kompatibel. Beispielsweise kann ein Profil der Dichtung halbsickenförmig oder vollsickenförmig ausgestaltet sein. Solche Sickendichtungen sind im Regelfall Metalldichtungen. Ebenfalls kann die Dichtung eine aus Gummi oder einem Elastomer bestehende Dichtlippe aufweisen. Auch ist es möglich, dass die Dichtung in der Hauptdichtzone eine Beschichtung aus einem elastischen Material aufweist. Es kann sich dann um eine Gummi-Metall-Dichtung handeln, und das elastische Material kann beispielsweise ein Elastomer sein.

Das Gehäuse kann in einem mit der Nebendichtzone der Dichtung überlappenden Bereich oder in einem von der Nebendichtzone überdeckten Bereich eine Nut aufweisen. Eine solche Nut kann sicherstellen, dass keine Feuchtigkeit im Spalt zwischen dem ersten Bauteil und dem zweiten Bauteil stehen bleibt. Die Nut und insbesondere der zur Außenseite verbleibende Spalt ist dabei vorzugsweise derartig dimensioniert, dass in den Spalt eingedrungene Feuchtigkeit den Spalt wieder verlassen kann und nicht von der Oberflächenspannung dort gehalten wird. Mit anderen Worten ist der Spalt vor dem feuchtigkeitsverdrängendem Material zur Außenwelt hin so groß, dass keine Feuchtigkeit stehen bleiben kann.

Das erfindungsgemäße Verfahren lässt sich sehr einfach ausführen. Viele bekannte herkömmliche Dichtungen sind zum Ausführen des Verfahrens geeignet. Es kann auf einen zweckmäßig ausgewählten Bereich der Dichtung eine ebenfalls zweckmäßig ausgewählte Menge eines hydrophoben Materials aufgetragen werden. Es ist dabei häufig von Vorteil, eine geschlossene Form, beispielsweise entlang des Umfangs der Dichtung oder in einem vorbestimmten Abstand von dem Umfang der Dichtung, aus dem hydrophobe Material zu bilden. Mit anderen Worten kann eine Spur oder Schnur des hydrophoben Materials aufgetragen werden, die einen geschlossenen Umfang, beispielsweise einen kreisförmigen oder an die konkrete Dichtungsform bzw. den Umriss der Dichtung angepassten Umfang, bildet.

Dabei kann das Applizieren des hydrophoben Materials vorteilhafterweise in geringem zeitlichen Abstand zum Anordnen der Dichtung zwischen dem ersten Bauteil und dem zweiten Bauteil stattfinden. Es wird so das Risiko von Verunreinigungen des hydrophoben Materials verringert. Ebenso wird die Wahrscheinlichkeit verringert, dass beim Transport oder Handling der Dichtung das hydrophobe Material mit anderen Gegenständen in Kontakt kommt, wodurch Teile des hydrophoben Materials von der Dichtung entfernt und/oder andere Gegenstände verunreinigt werden könnten. Unter einem geringen zeitlichen Abstand können hier beispielsweise weniger als 60 Minuten, weniger als 30 Minuten, weniger als 10 Minuten oder weniger als 5 Minuten verstanden werden. Besonders vorteilhaft kann das das Applizieren des hydrophoben Materials vorteilhafterweise unmittelbar vor dem Anordnen der Dichtung zwischen dem ersten Bauteil und dem zweiten Bauteil stattfinden.

Das hydrophobe Material kann beispielsweise in einem Spritzgussverfahren oder in einem anderen geeigneten Verfahren aufgetragen werden.

Ausführungsbeispiele der Erfindung werden anhand der Zeichnungen und der nachfolgenden Beschreibung näher erläutert. Es zeigen:
- Fig. 2:: ein erstes Ausführungsbeispiel einer erfindungsgemäßen Dichtung,
- Fig. 3:: ein zweites Ausführungsbeispiel einer erfindungsgemäßen Dichtung,
- Fig. 4:: ein drittes Ausführungsbeispiel einer erfindungsgemäßen Dichtung ,
- Fig. 5:: ein viertes Ausführungsbeispiel einer erfindungsgemäßen Dichtung, und
- Fig. 6:: drei weitere alternative Ausgestaltungsmöglichkeiten einer erfindungsgemäßen Dichtung.

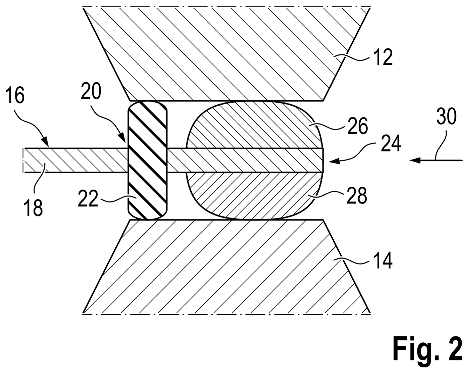

Figur 2 zeigt ein erstes Ausführungsbeispiel einer erfindungsgemäßen Dichtung 16. Die Dichtung 16 weist einen Grundkörper 18 auf, der im dargestellten Ausführungsbeispiel aus Metall hergestellt ist. Weiterhin weist die Dichtung 16 in einer Hauptdichtzone 20 einen Elastomeranteil 22 auf, welcher die primäre Dichtwirkung erzielt. Die Dichtung 16 ist wiederum zwischen einem ersten Bauteil 12 und einem zweiten Bauteil 14 eingespannt. Die Dichtung 16 soll den Kontaktbereich zwischen dem ersten Bauteil 12 und dem zweiten Bauteil 14 abdichten.

In einer Nebendichtzone 24 weist die Dichtung 16 sowohl auf einer zum ersten Bauteil 12 hin weisenden Seite als auch auf einer zum zweiten Bauteil 14 hin weisenden Seite jeweils ein erstes hydrophobes Material 26 und ein zweites hydrophobes Material 28 auf. Die hydrophoben Materialien 26 und 28 sind dabei in einer solchen Menge aufgetragen, dass ein im eingebauten Zustand der Dichtung 16 freier Querschnitt zwischen dem Grundkörper 18 der Dichtung 16 und den beiden Bauteilen 12, 14 vollständig ausgefüllt wird. Mit anderen Worten besteht dann vorteilhafter Weise keine Fluidverbindung zwischen der Hauptdichtzone 20 in Form des Elastomeranteils 22 und dem Außenbereich bzw. der äußeren Umgebung der Dichtung 16, aus der der ebenfalls schematisch dargestellte Korrosionsangriff 30 erfolgen kann. Zwischen der Hauptdichtzone 20 und der Nebendichtzone 24 kann ein Hohlraum angeordnet sein. Die Hauptdichtzone 20 kann aber auch unmittelbar an die Nebendichtzone 24 angrenzen.

Das von dem Grundkörper 18 der Dichtung 16, der Hauptdichtzone 20, im vorliegenden Fall in Form des Elastomeranteils 22, und den Bauteilen 12, 14 abgegrenzte Raum kann dabei vollständig von den hydrophoben Materialien 26, und 28 ausgefüllt sein. Dies ist aber nicht notwendig. Wesentlich ist, dass die Hauptdichtzone 20 durch die hydrophoben Materialien 26, 28 vollständig von der äußeren Umgebung abgetrennt ist. Es kann so sicher vermieden werden, dass Feuchtigkeit bis in die Hauptdichtzone 20 gelangt und dort beispielsweise den Elastomer oder eines der Bauteile 12, 14 beschädigt.

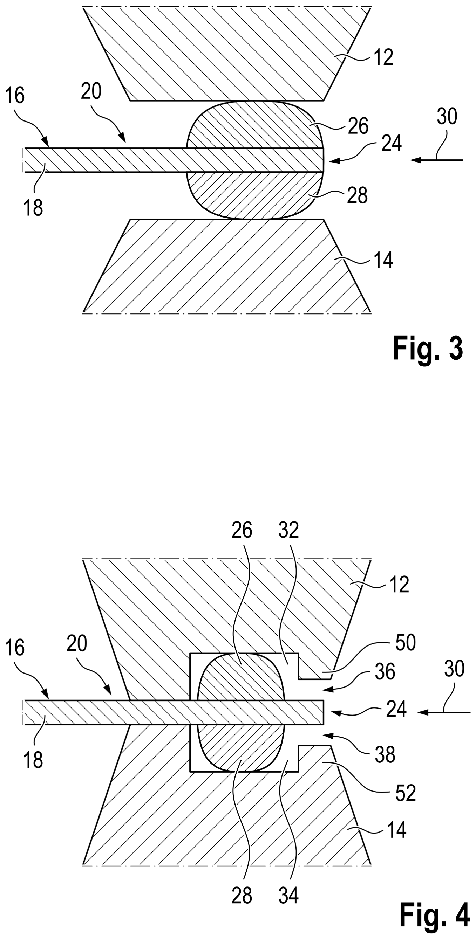

Figur 3 zeigt ein zweites Ausführungsbeispiel einer erfindungsgemäßen Dichtung 16. as zweite Ausführungsbeispiel ist ähnlich wie das erste Ausführungsbeispiel aufgebaut, weist im Unterschied zu diesem aber in der Hauptdichtzone 20 keinen Elastomeranteil auf. Die primäre Dichtwirkung wird hier also direkt durch ein Einspannen des Grundkörpers 18 der Dichtung 16 zwischen die beiden Bauteile 12, 14 erzielt. In gleicher Art wie beim ersten Ausführungsbeispiel verhindern aber die hydrophoben Materialien 26, 28 ein Eindringen von Feuchtigkeit in den inneren Anteil des Kontaktbereichs zwischen dem ersten Gehäuse 12 und dem zweiten Gehäuse 14. Auch auf diese Weise wird also ein Korrosionsangriff 30 wirkungsvoll verhindert.

Figur 4 zeigt ein drittes Ausführungsbeispiel einer erfindungsgemäßen Dichtung 16. Das dargestellte dritte Ausführungsbeispiel weist wie auch das zweite Ausführungsbeispiel ebenfalls keinen Elastomeranteil auf. Die Dichtung ist also wiederum als reine Metalldichtung ausgeführt. Eine andere Ausgestaltung, beispielsweise als Gummi-Metalldichtung oder als Sickendichtung wäre aber selbstverständlich ebenfalls denkbar. Abweichend von dem ersten Ausführungsbeispiel und von dem zweiten Ausführungsbeispiel weisen im dargestellten Ausführungsbeispiel das erste Bauteil 12 und das zweite Bauteil 14 jeweils eine obere Nut 32 und eine untere Nut 34 auf. Diese Nuten 32, 34 stellen dabei ein Volumen zum Aufnehmen der hydrophoben Materialien 26, 28 bereit. Es wird so erreicht, dass auf die Hauptdichtzone 20 ein großer Druck zum Erzielen der primären Dichtwirkung ausgeübt werden kann, die hydrophoben Materialien 26, 28 aber gleichzeitig ein relativ großes Volumen einnehmen können. Es kann so problemfrei eine größere Menge der hydrophoben Materialien 26, 28 verwendet werden, ohne dass die hydrophoben Materialien 26, 28 bei der Montage der Dichtung 16 aus dem Kontaktbereich herausquellen würden.

Das erste Bauteil 12 bildet in einem Randbereich gemeinsam mit der Dichtung 16 eine erste Öffnung aus, welche ausreichend dimensioniert ist, um eingedrungene Feuchtigkeit wieder abfließen zu lassen. Mit anderen Worten stellt das erste Bauteil 12 in der Nebendichtzone durch eine verringerte eigene Dicke bzw. Ausdehnung senkrecht zur Dichtfläche ein Aufnahmevolumen für das erste hydrophobe Material 26 bereit. Im dargestellten Ausführungsbeispiel verringert sich der Querschnitt dieses Volumens zum auf der Seite der Nebendichtzone 24 liegenden Rand des ersten Bauteils 12 hin. Es ergibt sich so ein relativ großes Volumen für das hydrophobe Material 26, welches aber gleichzeitig verhältnismäßig gut gegen äußere Angriffe, beispielsweise gegen mechanische oder chemische Angriffe, geschützt ist. Das erste Bauteil 12 bildet hierzu einen teilweise vor das Aufnahmevolumen für das erste hydrophobe Material 26 ragenden ersten Vorsprung 50 aus.

Es ist alternativ ebenfalls möglich, das Aufnahmevolumen für das erste hydrophobe Material mit einem konstanten Querschnitt auszugestalten. Der zuvor beschriebene erste Vorsprung 50 ist dann nicht vorhanden. Im einfachsten Fall entspricht die Form des Aufnahmevolumens dann einer Rechteck förmigen Ausnehmung im Querschnitt des Profils des ersten Bauteils 12. Ein Grundkörper der Dichtung 16 kann in der Nebendichtzone 24 eine geringere Ausdehnung in der Verbindungsrichtung zwischen dem ersten Bauteil und dem zweiten Bauteil aufweisen, als in der Hauptdichtzone 20. Mit anderen Worten kann die Nebendichtzone 24 dünner als die Hauptdichtzone 20 ausgestaltet sein.

Alle das erste Bauteil betreffenden zuvor beschriebenen Ausgestaltungen können selbstverständlich auch für das zweite Bauteil 14 umgesetzt werden. So ist in der Figur 4 eine zweite Nut 34 dargestellt, welche ebenfalls einen Aufnahmeraum für das zweite hydrophobe Material 28 bildet. Ebenso sind eine zweite Öffnung 38 und ein zweiter Vorsprung 52 vorhanden, die gleichartig zu der zuvor beschriebene erste Öffnung 36 und dem ersten Vorsprung 50 ausgestaltet sind.

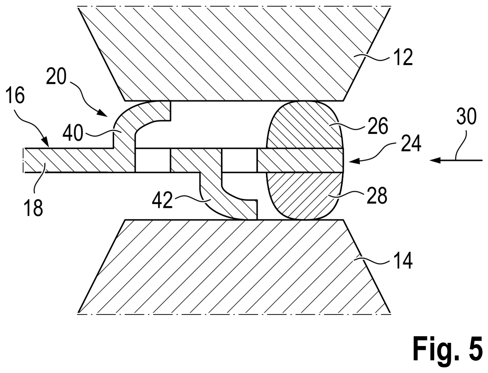

Figur 5 zeigt ein viertes Ausführungsbeispiel einer erfindungsgemäßen Dichtung 16. Die Dichtung 16 ist wiederum zwischen dem ersten Bauteil 12 und dem zweiten Bauteil 14 angeordnet. Die Dichtung ist dabei als Metalldichtung ausgeführt und weist entsprechend einen metallischen Grundkörper 18 auf. In der Hauptdichtzone 20 weist die Dichtung 16 eine obere Halbsicke 40 und eine untere Halbsicke 42 auf. In der Nebendichtzone 24 sind ähnlich wie zuvor bereits beschrieben ein erstes hydrophobes Material 26 und ein zweites hydrophobes Material 28 auf einander gegenüber liegenden Seiten der Dichtung 16 aufgetragen.

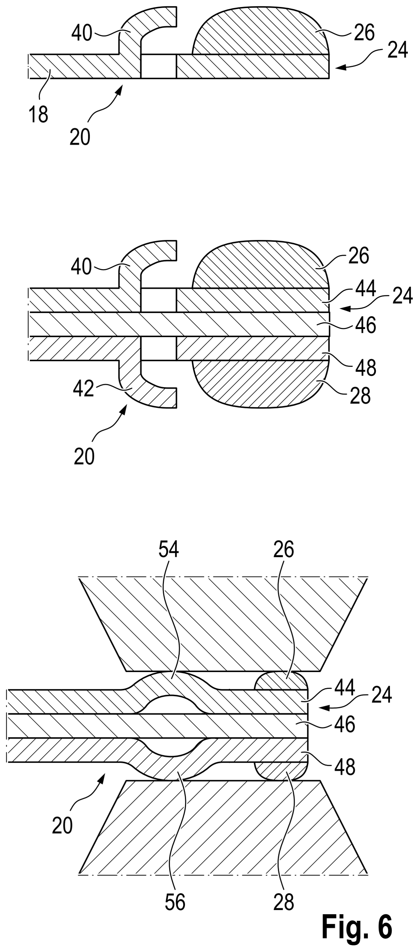

Figur 6 zeigt drei weitere alternative Ausgestaltungsmöglichkeiten einer erfindungsgemäßen Dichtung 16. Die im oberen Bereich der Figur dargestellte Dichtung 16 ist dabei als Halbsickendichtung ausgestaltet und weist einen metallischen Grundkörper 18 sowie in der Hauptdichtzone 24 eine obere Halbsicke 40 auf. In der Nebendichtzone 24 ist ein erstes hydrophobes Material 26 aufgetragen.

Im mittleren Bereich der Figur ist eine dreilagige Halbsickendichtung dargestellt. Der Grundkörper der dargestellten Dichtung 16 weist eine erste Lage 44, eine zweite Lage 46 und eine dritte Lage 48 auf, welche jeweils aus Metall hergestellt sind. Die zweite Lage 46 ist dabei zwischen der ersten Lage 44 und der dritten Lage 48 angeordnet. Die zweite Lage 46 kann als Zwischenlage oder als Zwischenblech bezeichnet werden. In der Hauptdichtzone 20 weist die erste Lage 44 eine obere Halbsicke 40 auf, und ebenfalls in der Hauptdichtzone 20 weist die untere Lage 48 eine untere Halbsicke 42 auf. In der Nebendichtzone 24 ist auf der äußeren Oberfläche der ersten Lage 44 ein erstes hydrophobes Material 26 aufgetragen, und auf der äußeren Oberfläche der dritten Lage 48 ist ein zweites hydrophobes Material 28 aufgetragen.

Im unteren Bereich der Figur ist eine dreilagige Vollsickendichtung dargestellt. Wie schon die zuvor beschriebene dreilagige Halbsickendichtung besteht auch diese aus drei Metalllagen 44, 46 und 48 und weist in der Nebendichtzone 24 die beiden hydrophoben Materialien 26 und 28 auf. Anstelle der zuvor beschriebenen Halbsicken sind in diesem Fall in der Hauptdichtzone aber eine obere Vollsicke 54 und eine untere Vollsicke 56 angeordnet.

Die Form und Ausrichtung der in den Figuren 5 und 6 dargestellten und beschriebenen Sicken und Halbsicken sind lediglich beispielhafte Ausgestaltungen. Andere Formen und Richtungen der Sicken und Halbsicken sind ebenfalls möglich und aus dem Stand der Technik bekannt. Beispielsweise können die äußeren Kanten der Halbsicken wie in den Figuren 5 und 6 dargestellt zum hydrophoben Material, mit anderen Worten also zur Nebendichtzone, hin zeigen. Eine entgegen gesetzte Ausrichtung, bei der die äußeren Kanten der Halbsicken von dem hydrophoben Material, mit anderen Worten also von der Nebendichtzone, weg zeigen, ist aber ebenfalls möglich.

### Bezugszeichenliste

- 2: erstes Bauteil
- 4: zweites Bauteil
- 6: Dichtung
- 8: Elastomer
- 10: Korrosionsangriff
- 12: erstes Bauteil
- 14: zweites Bauteil
- 16: Dichtung
- 18: Grundkörper
- 20: Hauptdichtzone
- 22: Elastomer
- 24: Nebendichtzone
- 26: erstes hydrophobes Material
- 28: zweites hydrophobes Material
- 30: Korrosionsangriff
- 32: erste Nut
- 34: zweite Nut
- 36: erste Öffnung
- 38: zweite Öffnung
- 40: obere Halbsicke
- 42: untere Halbsicke
- 44: erste Lage
- 46: zweite Lage
- 48: dritte Lage
- 50: erster Vorsprung
- 52: zweiter Vorsprung
- 54: obere Vollsicke
- 56: untere Vollsicke

## Patentansprüche

1. Dichtung (16) zum Abdichten eines Kontaktbereichs zwischen einem ersten Bauteil (12) und einem zweiten Bauteil (14), mit einem Grundkörper (18) aus Metall oder Kunststoff, und mit einer Hauptdichtzone (20) zum Erzielen einer primären Dichtwirkung, wobei die Hauptdichtzone (20) ausgestaltet ist, um auf einer ersten Seite mit dem ersten Bauteil (12) in Kontakt zu stehen und um auf einer zweiten Seite mit dem zweiten Bauteil (14) in Kontakt zu stehen, und mit einer Nebendichtzone (24), wobei auf eine erste Oberfläche der Nebendichtzone (24) und/oder auf eine zweite Oberfläche der Nebendichtzone (24) ein dauerplastisches hydrophobes Material (26, 28) oder ein mikroverkapseltes hydrophobes Material (26, 28) aufgetragen ist.

2. Dichtung (16) nach Anspruch 1, wobei die Nebendichtzone (24) näher als die Hauptdichtzone (20) an einem äußeren Umfang der Dichtung (16) angeordnet ist.

3. Dichtung (16) nach einem der vorstehenden Ansprüche, wobei das feuchtigkeitsverdrängende Material (26, 28) ein Wachs, ein Fett oder ein hochviskoses Kriechöl ist.

4. Dichtung (16) nach einem der vorstehenden Ansprüche, wobei das auf die erste Oberfläche der Nebendichtzone (24) und/oder auf die zweite Oberfläche der Nebendichtzone (24) aufgetragene aktivierbare mikroverkapselte hydrophobe Material (26, 28) durch Druck aktivierbar ist.

5. Dichtung (16) nach einem der vorstehenden Ansprüche, wobei das auf die erste Oberfläche der Nebendichtzone (24) und/oder auf die zweite Oberfläche der Nebendichtzone (24) aufgetragene aktivierbare mikroverkapselte hydrophobe Material (26, 28) durch Wärmezufuhr aktivierbar ist.

6. Dichtung (16) nach einem der vorstehenden Ansprüche, wobei das auf die erste Oberfläche der Nebendichtzone (24) und/oder auf die zweite Oberfläche der Nebendichtzone (24) aufgetragene aktivierbare mikroverkapselte hydrophobe Material (26, 28) durch elektromagnetische Strahlung aktivierbar ist.

7. Verfahren zum Abdichten eines Kontaktbereichs zwischen einem ersten Bauteil (12) und einem zweiten Bauteil (14), mit den Schritten
a. Vorlegen eines ersten Bauteils (12), eines zweiten Bauteils (14) und einer Dichtung (16) mit einem Grundkörper aus Metall oder Kunststoff,
b. Applizieren eines dauerplastischen hydrophoben Materials (26, 28) oder eines mikroverkapselten hydrophoben Materials (26, 28) auf einen Bereich zumindest einer Seite der Dichtung (16),
c. darauffolgendes Anordnen der Dichtung (16) zwischen dem ersten Bauteil (12) und dem zweiten Bauteil (14), und
d. Verbinden des ersten Bauteils (12) und des zweiten Bauteils (14) miteinander.

8. Verfahren nach Anspruch 7, wobei das Applizieren des hydrophoben Materials (26, 28) in geringem zeitlichen Abstand zum Anordnen der Dichtung (16) zwischen dem ersten Bauteil (12) und dem zweiten Bauteil (14) stattfindet.

9. System aus einem Gehäuse und einer Dichtung (16) nach einem der Ansprüche 1 bis 8, wobei das Gehäuse in einem mit der Nebendichtzone (24) der Dichtung (16) überlappenden Bereich oder in einem von der Nebendichtzone (24) überdeckten Bereich eine Nut (32, 34) aufweist.

10. Kraftfahrzeug mit einer Dichtung (16) nach einem der Ansprüche 1 bis 6 oder mit einem System nach Anspruch 9.
